# EUROPÄISCHE PATENTANMELDUNG

(11) **EP 4 667 895 A1**
(43) Veröffentlichungstag der Anmeldung: **24.12.2025**
(21) Anmeldenummer: 25176249.8
(22) Anmeldetag: 14.05.2025
(51) Int. Cl.: G01M 17/02

(54) **VERFAHREN UND VORRICHTUNG ZUM IDENTIFIZIEREN VON REIFENSEITENWÄNDEN UND FAHRZEUGREIFEN**

(30) Priorität: 19.06.2024 DE 102024205690
(71) Anmelder: Continental Reifen Deutschland GmbH, 30175 Hannover (DE)
(72) Erfinder: Moreira, Eduardo João, 4760-606 Lousado (PT); Salgado, Aurea, 4760-606 Lousado (PT); Mendes, Jorge, 4760-606 Lousado (PT)
(74) Vertreter: Continental Corporation

(57) **Zusammenfassung**

Verfahren zum Identifizieren von Reifenseitenwänden und Fahrzeugreifen (100), die um eine erste Rotationsachse (Rx1) rotierbar sind, umfassend die Schritte Bereitstellen des Fahrzeugreifens (100), Auflegen des Fahrzeugreifens (100) auf einen Drehteller (10), der um eine zweite Rotationsachse (Rx2) entlang einer Umlaufrichtung (UR) rotierbar ist, Zentrieren des Fahrzeugreifens (100) bezüglich des Drehtellers (10), so dass die erste Rotationsachse (Rx1) mit der zweiten Rotationsachse (Rx2) zusammenfällt, Ausrichten des Fahrzeugreifens (100) mittels des Drehtellers (10) in eine erste definierte Position (P1), Rotieren des Drehtellers (10), so dass der Fahrzeugreifen (100) eine zweite definierte Position (P2) einnimmt. Das Verfahren umfasst weiterhin die Schritte Untersuchen eines definierten Bereiches (110) des Fahrzeugreifens (100) mit einem Bildverarbeitungssystem (20), so dass ein Abbild (120) des definierten Bereichs (110) entsteht, wobei der definierte Bereich (110) einen Bereich des Fahrzeugreifens (100) darstellt, der entlang der Umlaufrichtung (UR) zwischen der ersten definierten Position (P1) und der zweiten definierten Position (P2) angeordnet ist, und Darstellen des Abbilds (120) mittels eines Darstellungsgerätes (30).

## Beschreibung

Die vorliegende Offenbarung betrifft ein Verfahren zum Identifizieren von Reifenseitenwänden und Fahrzeugreifen. Die vorliegende Offenbarung betrifft weiterhin eine Vorrichtung zum Identifizieren von Reifenseitenwänden und eine Fahrzeugreifen.

Reifenkennzeichen befinden sich bei Fahrzeugreifen im Allgemeinen im Seitenbereich des Fahrzeugreifens und dienen in erster Linie der Verbraucherinformation. Eine Reifenkennzeichnung umfasst unter anderem den Geschwindigkeitsindex, die Marke, die Reifengröße und das Herstellungsdatum (DOT-Nummer). Andere Kennzeichen weisen auf den Hersteller hin. Kennzeichen im Seitenbereich unterliegen in der Regel keiner Abnutzung, sodass diese über die gesamte Lebensdauer eines Fahrzeugreifens für den Verbraucher sichtbar sind. Diese Kennzeichen sind auch im montierten Zustand des Fahrzeugreifens an einer Felge sichtbar. Ein Fahrzeugreifen, der auch als Kraftfahrzeugreifen, Luftreifen oder Reifen bezeichnet werden kann, weist einen Laufstreifen und zwei Seitenflächen auf. Bei dem Laufstreifen handelt es sich um eine äußere, umlaufende Fläche, mit der der Fahrzeugreifen auf einem Untergrund abrollen kann. Der Laufstreifen verbindet die beiden Seitenflächen.

Es ist wünschenswert, ein Verfahren zum Identifizieren eines Fahrzeugreifen anhand seiner Reifenkennzeichnung anzugeben, das weniger fehleranfällig und einfach durchführbar ist. Es ist zudem wünschenswert, eine Vorrichtung zum Identifizieren eines Fahrzeugreifens anzugeben, die zuverlässig und einfach zu bedienen ist.

Ausführungsformen der vorliegenden Offenbarung betreffen ein Verfahren zum Identifizieren eines Fahrzeugreifens. Weitere Ausführungsformen der Offenbarung betreffen eine Vorrichtung, die geeignet ist die Schritte des Verfahrens zum Identifizieren eines Fahrzeugreifens durchzuführen. Das Verfahren wird beispielsweise mittels einer der hier beschriebenen Vorrichtungen durchgeführt. Es ist auch möglich, dass das Verfahren mittels einer anderen Vorrichtung durchgeführt wird.

Vorteile, Merkmale und Ausgestaltungen des Verfahrens gelten auch für die Vorrichtung und umgekehrt.

Das Verfahren zum Identifizieren eines Fahrzeugreifens umfasst das Bereitstellen des Fahrzeugreifens. Der Fahrzeugreifen ist um eine erste Rotationsachse rotierbar. Wenn der Fahrzeugreifen auf eine Felge aufgezogen wird und als Rad an einem Fahrzeug montiert ist, befindet sich das Fahrzeug in einem betriebsbereiten Zustand. Im betriebsbereiten Zustand entspricht die erste Rotationsachse einer Fahrzeugachse.

Der Fahrzeugreifen wird auf einen Drehteller aufgelegt. Der Fahrzeugreifen wird beispielsweise auf eine erste Seitenfläche des Fahrzeugreifens auf den Drehteller gelegt, so dass die zweite Seitenfläche des Fahrzeugreifens dem Drehteller abgewandt ist. In dieser Position des Fahrzeugreifens ist die erste Seitenfläche verdeckt und nicht sichtbar und die zweite Seitenfläche ist sichtbar. Der Drehteller ist um eine zweite Rotationsachse entlang einer Umlaufrichtung rotierbar angeordnet. Der Drehteller kann auch entgegen der Umlaufrichtung um die zweite Rotationsachse rotieren.

In einem weiteren Schritt wird der Fahrzeugreifen bezüglich des Drehtellers zentriert. Das Zentrieren wird beispielsweise mittels Zentrierblöcken realisiert. Die Zentrierblöcke liegen auf dem Drehteller auf und sind um die zweite Rotationsachse entlang der Umlaufrichtung angeordnet. Die Zentrierblöcke sind entlang einer radialen Richtung, die senkrecht zur zweiten Rotationsachse verläuft, verschiebbar gelagert. Dies ermöglicht es Fahrzeugreifen mit unterschiedlichen Innendurchmessern zu zentrieren und zu arretieren. Damit verrutschen die Fahrzeugreifen während der Rotation des Drehtellers nicht.

Durch das Zentrieren fällt die erste Rotationsachse mit der zweiten Rotationsachse zusammen. Somit wird bei einer Drehung des Drehtellers, der Fahrzeugreifen in die gleiche Richtung mitrotiert. Der Fahrzeugreifen rotiert um die zweite Rotationsachse, so dass eine gleichförmige Kreisbewegung entsteht.

Der Fahrzeugreifen wird mittels des Drehtellers in eine erste definierte Position ausgerichtet. Insbesondere ist die erste definierte Position eine Startposition. Die erste definierte Position ist beispielsweise durch einen Referenzpunkt auf dem Fahrzeugreifen definiert. Als Referenzpunkt kann eine Markierung auf dem Fahrzeugreifen dienen. Die Markierung ist beispielsweise auf der sichtbaren zweiten Seitenfläche des Fahrzeugreifens angeordnet. Die Markierung kann eine bereits vorgeschriebene notwendige Markierung auf dem Fahrzugreifen sein, die eine definierte Größe und Form besitzt und rechtlichen Bestimmungen genügt.

Zusätzlich kann als Referenzpunkt eine zusätzliche Markierung auf dem Drehteller dienen. Beispielsweise überlappt eine Markierung auf dem Drehteller mit der Markierung auf dem Fahrzeugreifen in der ersten definierten Position. Alternativ oder zusätzlich nimmt der Drehteller eine definierte Winkelposition ein, so dass die erste definierte Position des Fahrzeugreifens erreicht wird.

Der Drehteller wird so rotiert, dass der Fahrzeugreifen eine zweite definierte Position einnimmt. Als Referenzpunkt, dass die zweite definierte Position erreicht ist, wird die Markierung auf dem Drehteller und/oder auf dem Fahrzeugreifen verwendet. Insbesondere ist die zweite definierte Position eine Endposition.

Die erste Position und die zweite Position können unterschiedliche Positionen des Fahrzeugreifens darstellen. Alternativ stellen die erste Position und die zweite Position eine gleiche Position des Fahrzeugreifens dar. Beispielsweise, wenn der Fahrzeugreifen um 360° rotiert wird.

In einem weiteren Verfahrensschritt wird ein definierter Bereich des Fahrzeugreifens mit einem Bildverarbeitungssystem untersucht. Der definierte Bereich stellt einen Bereich auf der Seitenfläche des Fahrzeugreifens dar, der entlang der Umlaufrichtung zwischen der ersten definierten Position und der zweiten definierten Position angeordnet ist. So entsteht ein Abbild des definierten Bereichs. Das Abbild wird mittels eines Darstellungsgerätes dargestellt. Das Darstellungsgerät ist beispielsweise ein Bildschirm oder eine sonstige Anzeige, die es einem Nutzer erlaubt das Abbild und die dort enthaltenen Informationen zu betrachten und auszuwerten. Ein Bildverarbeitungssystem ist beispielsweise eine Kamera oder ein sonstiger Sensor, der geeignet ist, Oberflächen, Strukturen, Formen und Farben mit einer bestimmten Auflösung zu erfassen.

Gemäß einer Ausführungsform umfasst das Untersuchen des definierten Bereiches, ein Erfassen des definierten Bereichs mit dem Bildverarbeitungssystem. Auf diese Weise entsteht eine erste Bildaufnahme des definierten Bereichs. Das Untersuchen umfasst weiterhin ein Formatieren der ersten Bildaufnahme, so dass das Abbild des definierten Bereichs entsteht.

Gemäß einer Ausführungsform umfasst das Untersuchen des definierten Bereiches, ein Erfassen des definierten Bereichs mit dem Bildverarbeitungssystem. Auf diese Weise entsteht eine zweite Bildaufnahme des definierten Bereichs. Das Untersuchen umfasst weiterhin ein Formatieren der zweiten Bildaufnahme, so dass das Abbild des definierten Bereichs entsteht.

Der definierte Bereich wird beispielsweise mit Kameras oder sonstigen Sensoren, die geeignet sind, Oberflächen, Strukturen, Formen und Farben mit einer bestimmten Auflösung zu erfassen. Beispielsweise wird ein Sensor verwendet, der geeignet ist zweidimensionale Aufnahmen zu erzeugen. Alternativ oder zusätzlich wird ein Laser-Punktsensor für die Abstands- und dreidimensionale-Untersuchung von schnell bewegten Teilen verwendet.

Um das unterschiedliche Auflösungsvermögen der Sensoren zu kompensieren und die beiden Bildaufnahmen kombinieren zu können, wird das Bild mit der niedrigeren Auflösung formatiert. Formatieren bedeutet in diesem Zusammenhang, dass es beispielsweise in der Bildgröße an die Bildgröße der ersten Bildaufnahme angepasst wird.

Gemäß einer Ausführungsform umfasst das Formatieren der ersten Bildaufnahme und/oder der zweiten Bildaufnahme ein Strecken der Bildaufnahme. Strecken bedeutet in diesem Zusammenhang, dass eine Schriftanordnung oder eine Symbolkette auf der Seitenfläche des Fahrzugreifens, welche einen gebogenen Verlauf hat in eine Schriftanordnung oder eine Symbolkette umgewandelt wird, die einen geraden Verlauf hat. Die Schriftanordnung oder Symbolkette stellt die Kennzeichnung auf der Seitenfläche eines Fahrzeugreifens dar. Die Schriftanordnung oder Symbolkette ist auf der Seitenfläche des Fahrzeugreifens beispielsweise entlang der Umlaufrichtung zumindest teilweise kreisförmig angeordnet. Alternativ oder zusätzlich wird beim Formatieren die erste Bildaufnahme und/oder die zweite Bildaufnahme an einer umlaufenden Achse gespiegelt. Die umlaufende Achse erstreckt sich entlang der Umlaufrichtung. Alternativ oder zusätzlich wird die erste Bildaufnahme und/oder die zweite Bildaufnahme an einer radialen Achse gespiegelt. Die radiale Achse steht senkrecht auf der zweiten Rotationsachse. Durch die Spiegelung wird eine Schriftanordnung, beispielsweise ein Schriftzug, in eine für Menschen leserliche Form gebracht. Leserlich bedeutet in diesem Zusammenhang, dass ein Schriftzug beispielsweise in gewohnter Leserichtung und Ausrichtung dargestellt wird.

Gemäß einer Ausführungsform umfasst das Untersuchen des definierten Bereichs ein Bestimmen von Abstandsgrößen mindestens eines Symbols aus der Symbolkette oder eines Schriftzeichens aus der Schriftanordnung. Die Abstandsgrößen werden beispielsweise mit einem linearen 3D-Sensor ermittelt. Abstandsgrößen sind beispielsweise eine Höhe, eine Tiefe oder eine Breite des Symboles oder des Schriftzeichens. Abstandsgrößen sind zudem Abstände zwischen zwei Symbolen und/oder Schriftzeichen. Beispielsweise der Abstand zwischen zwei benachbarten Symbolen und/oder Schriftzeichen.

Das Untersuchen umfasst weiterhin ein Ermitteln, ob die Abstandsgrößen in einem vorgegebenen Wertebereich liegen. Liegt eine Abstandsgröße in einem legitimen Wertebereich, wird die Abstandsgröße im Abbild beispielsweise in grüner Farbe hervorgehoben. Liegt eine Abstandsgröße außerhalb eines legitimen Wertebereichs, wird die Abstandsgröße im Abbild beispielsweise in roter Farbe hervorgehoben. Die Einfärbung ermöglicht eine schnelle und weniger fehleranfällige Auswertung der Abstandsgrößen durch einen Nutzer. In einer Weiterbildung wird die Auswertung beispielsweise computergesteuert automatisiert, so dass ein menschlicher Eingriff nicht mehr notwendig ist. Der Wertebereich ist beispielsweise durch gesetzliche Vorgaben definiert.

Gemäß einer Ausführungsform umfasst das Verfahren den Schritt des Kombinierens der ersten Bildaufnahme und der zweiten Bildaufnahme.

Um ein möglichst detailliertes Abbild des definierten Bereichs zu erhalten, werden verschiedene Kameras und Sensoren verwendet. Mittels eines Laser-Punktsensors lassen sich beispielsweise besser Defekte erfassen und für das menschliche Auge abbilden. Defekte sind beispielsweise Symbolen und/oder Schriftzeichen, die aufgrund ihrer Beschaffenheit von definierten und vorgegebenen Symbolen und/oder Schriftzeichen abweichen. Definierte und vorgegebene Symbole und/oder Schriftzeichen sind beispielsweise Schriftzüge, die den gesetzlichen Vorgaben genügen.

Sensor, die geeignet sind zweidimensionale Aufnahmen zu erzeugen, besitzen eine höhere Auflösung und können somit sich schneller bewegende Objekte erfassen. Um Prüfverfahren möglichst effizient und schnell zu gestalten, sind Sensoren mit einer hohen Auflösung notwendig. Durch die Kombination von hochauflösenden zweidimensionalen Sensoren und detailreichen dreidimensionalen Sensoren wird der definierte Bereich optimal abgebildet, so dass möglichst viele Defekte sichtbar werden und gleichzeitig wird ein möglichst schnelles Prüfverfahren gewährleistet. So können Symbole und/oder Schriftzeichen mit definierten und vorgegebenen Anforderungen effizienter verglichen werden.

Gemäß einer Ausführungsform umfasst das wird das Untersuchen des definierten Bereichs während des Rotierens des Drehtellers durchgeführt.

Die Untersuchung eines definierten Bereichs auf dem Fahrzeugreifen, indem der definierte Bereich abgerastert und/oder sukzessive erfasst wird, liefert eine bessere Auflösung mit mehr Details als eine Untersuchung des gesamten Fahrzeugreifens mit einer einzigen Aufnahme.

Das Verfahren ist für Fahrzeugreifen mit unterschiedlichen Durchmessern geeignet. Die Fahrzeugreifen müssen nicht in einem fertigen Zustand vorliegen. Das Verfahren kann auf Fahrzeugreifen angewendet werden, bevor sie vulkanisiert werden oder nachdem sie vulkanisiert worden sind.

Eine Vorrichtung, die ausgebildet ist, die Schritte des Verfahrens zum Identifizieren eines Fahrzeugreifens durchzuführen, weist einen Drehteller auf. Der Drehteller ist um eine zweite Rotationsachse entlang der Umlaufrichtung rotierbar. Die Vorrichtung weist zudem ein Bildverarbeitungssystem zum Untersuchen eines definierten Bereichs auf. Das Bildverarbeitungssystem erzeugt ein Abbild des definierten Bereichs. Um den definierten Bereich geeignet zu formatieren und auszuwerten ist ein Prozessor vorgesehen. Mittels eines Speichers können die erzeugten Abbilder des definierten Bereichs gespeichert werden. Die Vorrichtung weist weiterhin ein Darstellungsgerät zum Darstellen des Abbilds auf. Das Darstellungsgerät ist beispielsweise ein Bildschirm oder eine sonstige Anzeige, die es einem Nutzer erlaubt das Abbild und die dort enthaltenen Informationen zu betrachten und auszuwerten.

Gemäß einer Ausführungsform weist das Bildverarbeitungssystem einen ersten Sensor auf. Der erste Sensor ist dazu eingerichtet ein zweidimensionales Bild des definierten Bereichs aufzunehmen. Alternativ oder zusätzlich weist das Bildverarbeitungssystem einen zweiten Sensor auf. Der zweite Sensor ist dazu eingerichtet ein dreidimensionales Bild des definierten Bereichs aufzunehmen.

Ein Bildverarbeitungssystem ist beispielsweise eine Kamera oder ein sonstiger Sensor, der geeignet ist, Oberflächen, Strukturen, Formen und Farben mit einer bestimmten Auflösung zu erfassen.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können figurenübergreifend mit den gleichen Bezugszeichen versehen sein. Die Figuren und die Größenverhältnisse der in den Figuren dargestellten Elemente sind nicht als maßstäblich zu betrachten. Vielmehr können einzelne Elemente zur besseren Darstellbarkeit und/oder für eine bessere Verständlichkeit übertrieben groß und/oder dick dargestellt sein.

Es zeigen:
- Figur 1: eine schematische Darstellung einer Vorrichtung gemäß einem Ausführungsbeispiel,
- Figur 2: eine schematische Draufsicht einer Vorrichtung gemäß einem Ausführungsbeispiel, und
- Figur 3: eine schematische Darstellung eines Abbilds.

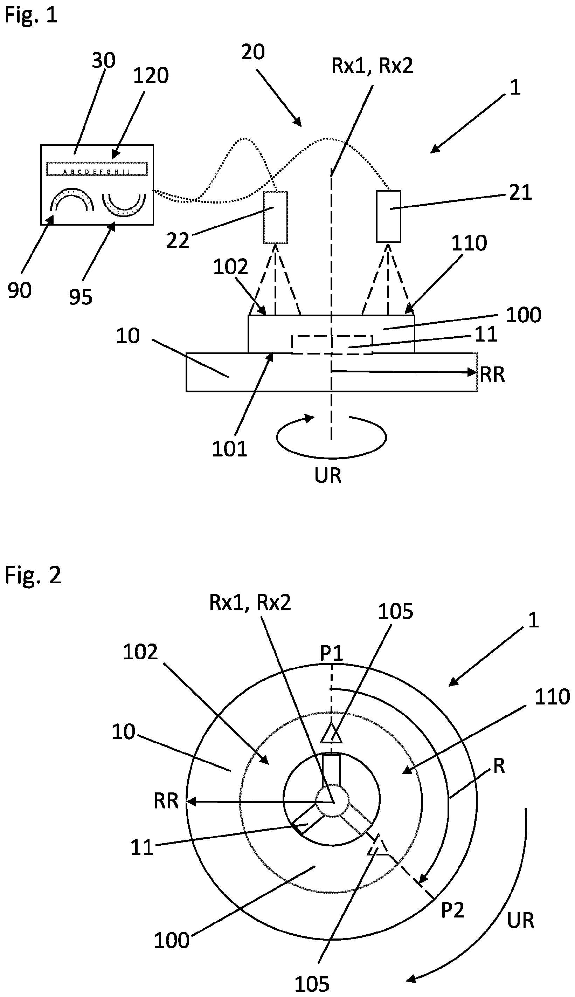

Figur 1 zeigt eine Vorrichtung 1, die ausgebildet ist einen Fahrzeugreifen 100 zu identifizieren. Der Fahrzeugreifen 100 ist um eine erste Rotationsachse Rx1 rotierbar.

Die Vorrichtung 1 weist einen Drehteller 10 auf. Der Drehteller 10 ist um eine zweite Rotationsachse Rx2 entlang einer Umlaufrichtung UR rotierbar. Rotierbar bedeutet in diesem Zusammenhang, dass der Drehteller 10 geeignet ist entlang der Umlaufrichtung UR oder entgegengesetzt der Umlaufrichtung UR zu rotieren. Der Drehteller 10 kann auch entgegen der Umlaufrichtung UR um die zweite Rotationsachse Rx2 rotieren. Der Fahrzeugreifen 100 liegt auf dem Drehteller 10 auf. Der Fahrzeugreifen 100 liegt beispielsweise auf einer ersten Seitenfläche 101 des Fahrzeugreifens 100 auf dem Drehteller 10. In diesem Fall ist eine zweite Seitenfläche 102 des Fahrzeugreifens 100 dem Drehteller 10 abgewandt. Die erste Seitenfläche 101 liegt der zweiten Seitenfläche 102 entlang der ersten Rotationsachse Rx1 gegenüber. In dieser Position des Fahrzeugreifens 100 ist die erste Seitenfläche 101 vom Drehteller 10 verdeckt und nicht sichtbar und die zweite Seitenfläche 102 ist sichtbar.

Mittels Zentrierblöcken 11 wird der Fahrzeugreifen 10 auf dem Drehteller 10 zentriert und arretiert. Die Zentrierblöcke sind gestrichelt dargestellt und befinden sich im Zentrum des Fahrzeugreifens 100. Die Zentrierblöcke 11 liegen auf dem Drehteller 10 auf und sind um die zweite Rotationsachse Rx2 entlang der Umlaufrichtung UR angeordnet. Die Zentrierblöcke 11 sind entlang einer radialen Richtung RR verschiebbar gelagert. Die radiale Richtung RR steht senkrecht auf der zweiten Rotationsachse Rx2. Die radiale Richtung RR verläuft vom Zentrum des Drehtellers 10 zum Umfang des Drehtellers 10. Dies ermöglicht es Fahrzeugreifen 100 mit unterschiedlichen Innendurchmessern zu zentrieren und zu arretieren. Damit verrutschen die Fahrzeugreifen 100 während der Rotation des Drehtellers 10 nicht. Beim Zentrieren des Fahrzeugreifens 100 bezüglich des Drehtellers 10 fällt die erste Rotationsachse Rx1 mit der zweiten Rotationsachse Rx2 zusammen.

Durch das Zentrieren des Fahrzeugreifens 100 fällt die erste Rotationsachse Rx1 mit der zweiten Rotationsachse Rx2 zusammen. Somit wird bei einer Drehung des Drehtellers 10, der Fahrzeugreifen 100 in die gleiche Richtung mitrotiert. Der Fahrzeugreifen 100 rotiert um die zweite Rotationsachse Rx2, so dass eine gleichförmige Kreisbewegung entsteht.

Die Vorrichtung 1 weist weiterhin ein Bildverarbeitungssystem 20 zum Untersuchen eines definierten Bereichs 110 auf. Der definierte Bereich 110 befindet sich auf der zweiten Seitenfläche 102, die dem Bildverarbeitungssystem 20 zugewandt ist und dem Drehteller 10 abgewandt ist. Der definierte Bereich 110 ist beispielweise ein Teilausschnitt der zweiten Seitenfläche 102 und hat die Form eines Kreisringausschnitts. Alternativ ist der definierte Bereich 110 ein vollständiger Kreisring und nimmt einen Vollwinkel ein.

Das Bildverarbeitungssystem 20 erfasst beim Untersuchen des definierten Bereiches 100 den definierten Bereich 110. Auf diese Weise entsteht eine erste Bildaufnahme 90 des definierten Bereichs 110. Die ersten Bildaufnahme 90 wird so formatiert, dass ein Abbild 120 des definierten Bereichs 110 entsteht. Alternativ oder zusätzlich erfasst das Bildverarbeitungssystem 20 den definierten Bereich 110, so dass eine zweite Bildaufnahme 95 des definierten Bereichs 110 entsteht. Die zweite Bildaufnahme 95 wird so formatiert, dass das Abbild 120 des definierten Bereichs 110 entsteht.

Das Bildverarbeitungssystem 20 erzeugt das Abbild 120 des definierten Bereichs 110. Um den definierten Bereich 110 geeignet zu formatieren und auszuwerten ist ein Prozessor vorgesehen. Mittels eines Speichers können die erzeugten Abbilder 120 des definierten Bereichs 110 gespeichert werden. Die Vorrichtung 1 weist weiterhin ein Darstellungsgerät 30 zum Darstellen des Abbilds 120 auf. Das Darstellungsgerät 30 ist beispielsweise ein Bildschirm oder eine sonstige Anzeige, die es einem Nutzer erlaubt das Abbild 120 und die darin enthaltenen Informationen zu betrachten und auszuwerten.

Das Bildverarbeitungssystem 20 weist einen ersten Sensor 21 auf. Der erste Sensor 21 ist beispielsweise dazu eingerichtet ein zweidimensionales Bild des definierten Bereichs 110 aufzunehmen. Alternativ oder zusätzlich weist das Bildverarbeitungssystem 20 einen zweiten Sensor 22 auf. Der zweite Sensor 22 ist beispielsweise dazu eingerichtet ein dreidimensionales Bild des definierten Bereichs 110 aufzunehmen. Das Bildverarbeitungssystem 20 ist beispielsweise eine Kamera oder ein sonstiger Sensor, der geeignet ist, Oberflächen, Strukturen, Formen und Farben mit einer bestimmten Auflösung zu erfassen.

Der erste Sensor 21 und der zweite Sensor 22 können entlang der radialen Richtung RR in der Ebene bewegt werden, um einen bestimmten Bereich des Fahrzeugreifens 100 zu erfassen. Zudem können der erste Sensor 21 und der zweite Sensor 22 entlang der zweiten Rotationsachse Rx2 hoch und runter bewegt werden. Hoch und runter bedeutet in diesem Zusammenhang in Richtung der zweiten Seitenfläche 102 oder weg von der zweiten Seitenfläche entlang der zweiten Rotationsachse Rx2.

Figur 2 zeigt die Vorrichtung 1 in einer Draufsicht auf den Drehteller 10 und den Fahrzeugreifen 100. Draufsicht bedeutet in diesem Zusammenhang, dass ein Betrachter entlang der zweiten Rotationsachse Rx2 auf die zweite Seitenfläche 102 schaut.

Der Fahrzeugreifen 100 wird mittels des Drehtellers 10 in eine erste definierte Position P1 ausgerichtet. Insbesondere ist die erste definierte Position P1 eine Startposition. Die erste definierte Position P1 ist beispielsweise durch einen ersten Referenzpunkt auf dem Fahrzeugreifen 100 definiert. Als Referenzpunkt kann eine Markierung 105 auf dem Fahrzeugreifen 100 dienen. Die Markierung 105 ist beispielsweise auf der sichtbaren zweiten Seitenfläche 102 des Fahrzeugreifens 100 angeordnet. Die Markierung 105 kann eine bereits vorgeschriebene notwendige Markierung 105 auf dem Fahrzugreifen 100 sein, die eine definierte Größe und Form besitzt und rechtlichen Bestimmungen genügt. In Figur 2 ist die Markierung 105, wenn sich der Fahrzeugreifen 100 in der ersten definierten Position P1 befindet als durchgängiges Dreieck dargestellt. Zusätzlich kann als Referenzpunkt eine zusätzliche Markierung auf dem Drehteller 10 dienen. Beispielsweise überlappt eine Markierung auf dem Drehteller 10 mit der Markierung 105 auf dem Fahrzeugreifen 100 in der ersten definierten Position P1. Alternativ oder zusätzlich nimmt der Drehteller 10 eine definierte Winkelposition ein, so dass die erste definierte Position P1 des Fahrzeugreifens 100 erreicht wird.

Der Drehteller 10 wird so rotiert, dass der Fahrzeugreifen 100 eine zweite definierte Position P2 einnimmt. Als Referenzpunkt, dass die zweite definierte Position P2 erreicht ist, wird die Markierung auf dem Drehteller 10 und/oder auf dem Fahrzeugreifen 100 verwendet. Insbesondere ist die zweite definierte Position P2 eine Endposition. In der zweiten definierten Position P2 des Fahrzeugreifens ist die Markierung 105 als gestricheltes Dreieck dargestellt. Die Form der Markierung 105 beschränkt sich nicht auf eine dreieckige Form.

Die erste Position P1 und die zweite Position P2 können unterschiedliche Positionen des Fahrzeugreifens 100 darstellen. Alternativ stellen die erste Position P1 und die zweite Position P2 eine gleiche Position des Fahrzeugreifens 100 dar. Beispielsweise, wenn der Fahrzeugreifen 100 um 360° rotiert wird.

Der definierte Bereich 110 befindet sich auf der zweiten Seitenfläche 102 zwischen der ersten definierten Position P1 und der zweiten definierten Position P2. Die erste definierte Position P1 und die zweite definierte Position P2 sind durch gestrichelte Linien dargestellt. Die Fläche auf der zweiten Seitenfläche 102, die überstrichen wird, wenn der Fahrzeugreifen 100 von der ersten definierten Position P1 zur zweiten definierten Position P2 entlang der Umlaufrichtung UR rotiert, stellt den definierten Bereich 110 dar. Die Bewegung des Fahrzeugreifens 100 von der ersten definierten Position 1 bis zur zweiten definierten Position P2 ist mit einem durchgehenden Pfeil R dargestellt.

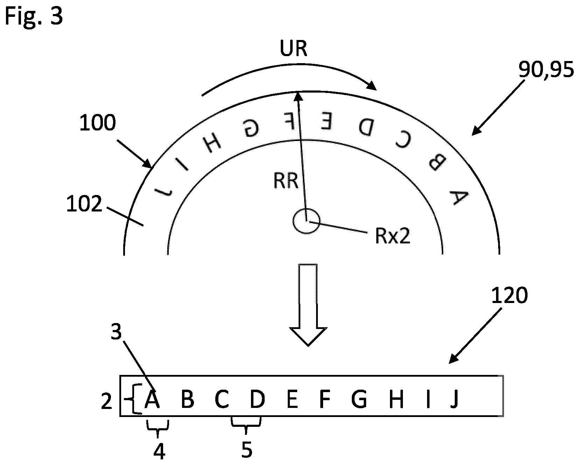

Figur 3 zeigt ein Ausführungsbeispiel des formatierten Abbilds 120. Das Formatieren der ersten Bildaufnahme 90 und/oder der zweiten Bildaufnahme 95 umfasst ein Strecken der Bildaufnahme 90, 95. Strecken bedeutet in diesem Zusammenhang, dass eine Schriftanordnung oder eine Symbolkette auf der zweiten Seitenfläche 102 des Fahrzugreifens 100, welche einen gebogenen Verlauf hat, in eine Schriftanordnung oder eine Symbolkette umgewandelt wird, die einen geraden Verlauf hat. Die Schriftanordnung oder Symbolkette stellt die Kennzeichnung auf der Seitenfläche 102 des Fahrzeugreifens 100 dar. Die Schriftanordnung oder Symbolkette ist auf der Seitenfläche 102 des Fahrzeugreifens 100 beispielsweise entlang der Umlaufrichtung UR zumindest teilweise kreisförmig angeordnet. Alternativ oder zusätzlich wird beim Formatieren die erste Bildaufnahme 90 und/oder die zweite Bildaufnahme 95 an einer umlaufenden Achse gespiegelt. Die umlaufende Achse erstreckt sich entlang der Umlaufrichtung UR. Alternativ oder zusätzlich wird die erste Bildaufnahme 90 und/oder die zweite Bildaufnahme 95 an einer radialen Achse. Die gleich gerichtet ist zur radialen Richtung RR gespiegelt. Die radiale Achse steht senkrecht auf der zweiten Rotationsachse Rx2. Durch die Spiegelung wird eine Schriftanordnung, beispielsweise ein Schriftzug, in eine für Menschen leserliche Form gebracht. Leserlich bedeutet in diesem Zusammenhang, dass ein Schriftzug beispielsweise in gewohnter Leserichtung und Ausrichtung dargestellt wird. Auf diese Weise wird aus einer Bildaufnahme 90, 95 ein Abbild 120 des definierten Bereichs 110.

Das Untersuchen des definierten Bereichs 110 umfasst zudem ein Bestimmen von Abstandsgrößen mindestens eines Symbols aus der Symbolkette oder eines Schriftzeichens aus der Schriftanordnung. Die Abstandsgrößen werden beispielsweise mit einem linearen 3D-Sensor ermittelt. Abstandsgrößen sind beispielsweise eine Höhe 2, eine Tiefe 3 oder eine Breite 4 des Symboles oder des Schriftzeichens. Abstandsgrößen sind zudem Abstände 5 zwischen zwei Symbolen und/oder Schriftzeichen. Beispielsweise der Abstand 5 zwischen zwei benachbarten Symbolen und/oder Schriftzeichen. Die Abstandsgrößen können abhängig davon, ob sie in einem Wertebereich liegen, eingefärbt werden. Auf diese Weise kann bei entsprechender Darstellung besser erkannt werden, welche Abstandsgrößen nicht gesetzlichen Vorgaben genügen.

### Bezugszeichenliste

- 1: Vorrichtung
- 2: Höhe
- 3: Tiefe
- 4: Breite
- 5: Abstand
- 10: Drehteller
- 20: Bildverarbeitungssystem
- 21: erster Sensor
- 22: zweiter Sensor
- 30: Darstellungsgerät

- 90: erste Bildaufnahme
- 95: zweite Bildaufnahme
- 100: Fahrzeugreifen
- 110: definierter Bereich
- 120: Abbild

- UR: Umlaufrichtung
- RR: Radiale Richtung
- Rx1: erste Rotationsachse
- Rx2: zweite Rotationsachse
- P1: erste definierte Position
- P2: zweite definierte Position

## Patentansprüche

1. Verfahren zum Identifizieren von Reifenseitenwänden und Fahrzeugreifen (100), die um eine erste Rotationsachse (Rx1) rotierbar sind, umfassend die Schritte
- Bereitstellen des Fahrzeugreifens (100),
- Auflegen des Fahrzeugreifens (100) auf einen Drehteller (10), der um eine zweite Rotationsachse (Rx2) entlang einer Umlaufrichtung (UR) rotierbar ist,
- Zentrieren des Fahrzeugreifens (100) bezüglich des Drehtellers (10), so dass die erste Rotationsachse (Rx1) mit der zweiten Rotationsachse (Rx2) zusammenfällt,
- Ausrichten des Fahrzeugreifens (100) mittels des Drehtellers (10) in eine erste definierte Position (P1),
- Rotieren des Drehtellers (10), so dass der Fahrzeugreifen (100) eine zweite definierte Position (P2) einnimmt,
- Untersuchen eines definierten Bereiches (110) des Fahrzeugreifens (100) mit einem Bildverarbeitungssystem (20), so dass ein Abbild (120) des definierten Bereichs (110) entsteht, wobei
- der definierte Bereich (110) einen Bereich des Fahrzeugreifens (100) darstellt, der entlang der Umlaufrichtung (UR) zwischen der ersten definierten Position (P1) und der zweiten definierten Position (P2) angeordnet ist, und
- Darstellen des Abbilds (120) mittels eines Darstellungsgerätes (30).

2. Verfahren nach Anspruch 1, wobei das Untersuchen des definierten Bereiches (110) umfasst
- Erfassen des definierten Bereichs (110) mit dem Bildverarbeitungssystem (20), so dass eine erste Bildaufnahme (90) des definierten Bereichs (110) entsteht und
- Formatieren der ersten Bildaufnahme (90), so dass das Abbild (120) des definierten Bereichs (110) entsteht.

3. Verfahren nach einem der vorhergehenden Ansprüche, wobei das Untersuchen des definierten Bereiches (110) umfasst
- Erfassen des definierten Bereichs (110) mit dem Bildverarbeitungssystem (20), so dass eine zweite Bildaufnahme (95) des definierten Bereichs (110) entsteht und
- Formatieren der zweiten Bildaufnahme (95), so dass das Abbild (120) des definierten Bereichs (110) entsteht.

4. Verfahren nach Anspruch 2 oder 3, wobei das Formatieren der ersten Bildaufnahme (90) und der zweiten Bildaufnahme (95) mindestens eines umfasst aus:
- Strecken der ersten Bildaufnahme (90) und der zweiten Bildaufnahme (95),
- Spiegeln der ersten Bildaufnahme (90) und der zweiten Bildaufnahme (95) an einer umlaufenden Achse, die sich entlang der Umlaufrichtung (UR) erstreckt, und
- Spiegeln der ersten Bildaufnahme (90) und der zweiten Bildaufnahme (95) an einer radialen Achse, die senkrecht auf der zweiten Rotationsachse (Rx2) steht.

5. Verfahren nach einem der vorhergehenden Ansprüche, wobei das Untersuchen des definierten Bereichs (110) umfasst
- Bestimmen von Abstandsgrößen mindestens eines Symboles, wobei die Abstandsgrößen umfassen eine Höhe (2), eine Tiefe (3) und/oder eine Breite (4) des Symboles und/oder einen Abstand (5) zwischen zwei Symbolen und
- Ermitteln, ob die Abstandsgrößen in einem vorgegebenen Wertebereich liegen.

6. Verfahren nach Anspruch 5, umfassend
- Markieren der Abstandsgrößen in einer ersten Farbe, wenn die Abstandsgrößen innerhalb des vorgegebenen Wertebereichs liegen und/oder
- Markieren der Abstandsgrößen in einer zweiten Farbe, wenn die Abstandsgrößen außerhalb des vorgegebenen Wertebereichs liegen.

7. Verfahren nach einem der Ansprüche 3 bis 6, umfassend
- Kombinieren der ersten Bildaufnahme (90) und der zweiten Bildaufnahme (95), so dass das Abbild (120) des definierten Bereichs (110) entsteht.

8. Verfahren nach einem der vorhergehenden Ansprüche, wobei das Untersuchen des definierten Bereichs (110) während des Rotierens des Drehtellers (10) durchgeführt wird.

9. Vorrichtung (1), die ausgebildet ist die Schritte des Verfahrens nach Anspruch 1 zum Identifizieren eines Fahrzeugreifens (100) durchzuführen, aufweisend
- einen Drehteller (10), der um eine zweite Rotationsachse (Rx2) entlang der Umlaufrichtung (UR) rotierbar ist,
- ein Bildverarbeitungssystem (20) zum Untersuchen eines definierten Bereichs (110), so dass ein Abbild (120) des definierten Bereichs (110) entsteht und
- ein Darstellungsgerät (30) zum Darstellen des Abbilds (120).

10. Vorrichtung (1) nach Anspruch 9, wobei das Bildverarbeitungssystem (20) aufweist
- einen ersten Sensor (21), welcher dazu eingerichtet ist ein zweidimensionales Bild aufzunehmen und/oder
- einen zweiten Sensor (22), welcher dazu eingerichtet ist ein dreidimensionales Bild aufzunehmen.
